(19) Europäisches Patentamt / European Patent Office / Office européen des brevets

(11) **EP 4 603 458 A1**

(12) **EUROPEAN PATENT APPLICATION**
published in accordance with Art. 153(4) EPC

(43) Date of publication:
**20.08.2025  Bulletin 2025/34**

(21) Application number: **23877677.7**

(22) Date of filing: **11.10.2023**

(51) International Patent Classification (IPC):
*C01F 7/043* (2022.01)     *C01D 15/04* (2006.01)
*C01D 15/08* (2006.01)     *H01M 10/54* (2006.01)
*H01M 10/052* (2010.01)     *B02C 23/08* (2006.01)

(52) Cooperative Patent Classification (CPC):
B02C 23/08; C01D 15/04; C01D 15/08;
C01F 7/043; H01M 10/052; H01M 10/54;
Y02W 30/84

(86) International application number:
**PCT/KR2023/015650**

(87) International publication number:
**WO 2024/080754 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **12.10.2022  KR 20220130772**

(71) Applicants:
• **POSCO Holdings Inc.**
  **Seoul 06194 (KR)**
• **POSCO Co., Ltd**
  **Pohang-si, Gyeongsangbuk-do 37859 (KR)**

(72) Inventors:
• **KIM, Wanyi**
  **Seoul 06194 (KR)**
• **KIM, Chun**
  **Seoul 06194 (KR)**
• **HAN, Sangwoo**
  **Seoul 06194 (KR)**
• **LEE, Juseung**
  **Seoul 06194 (KR)**
• **PARK, Joongkil**
  **Seoul 06194 (KR)**

(74) Representative: **Pfenning, Meinig & Partner mbB Patent- und Rechtsanwälte Theresienhöhe 11a 80339 München (DE)**

(54) **LITHIUM COMPOUND FOR VALUABLE METAL RECOVERY AND METHOD FOR PREPARING SAME**

(57)     Provided are a lithium compound for recovering valuable metals and a method for recovering the same. The method for recovering a lithium compound for recovering valuable metals includes: preparing a battery, freezing and forcibly discharging the battery, crushing the battery, and heating the crushed battery material, wherein the heating is performed in a temperature range of 1,100 to 1,400°C, the heating is performed at a vacuum degree (LogP [atm]) in a range of -4 to 0, the lithium compound recovered by the heating includes impurities, and the impurities include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight.

FIG. 5

## Description

### [Technical Field]

The following disclosure relates to a waste battery, and relates to a lithium compound for recovering valuable metals recovered from waste battery recycling and a method for manufacturing the same.

### [Background Art]

As a demand for electric vehicles is growing worldwide, a problem of treating waste batteries resulting from the electric vehicles is emerging as a social issue. A lithium secondary battery which is the main raw material of the waste battery contains an organic solvent, an explosive material, and heavy metal materials such as Ni, Co, Mn, and Fe, but Ni, Co, Mn, and Li has a great rarity as a valuable metal, and recovery and recycling processes after discarding the lithium secondary battery is emerging as an important field of study.

Specifically, the lithium secondary battery includes copper and aluminum which are used as a current collector, a Li, Ni, Co, or Mn-containing oxide forming a positive electrode material, and graphite used as a negative electrode material, as the main configuration, and also includes a separator which separates the positive electrode material and the negative electrode material and an electrolyte solution which is injected into the separator. A solvent forming the electrolyte solution and a solvent used as a salt are used mainly in combination with carbonate organic materials such as ethylene carbonate and propylene carbonate, and for example, $LiPF_6$ is used.

In order to use the waste battery, there is growing interest in a waste battery recycling process in which the waste battery is ground to produce an intermediate material such as crushed waste battery material or black powder, and then is subjected to a post-process to recovery valuable metals.

Specifically, the main component of the waste battery includes high-priced valuable metal elements such as Ni, Co, Mn, and Li. The waste battery is, for example, a battery which has reached the end of its life after using a secondary cell battery in cycles of 5 to 10 years, and it is absolutely necessary from the environmental and cost perspective to recycle the main components of the waste battery. The waste battery is subjected to common crushing, grinding, or gravity separation to produce a mixture of a positive electrode and a negative electrode material in the form of black powder which is an intermediate product. From the black powder produced as such, the valuable metals essential for battery production are recovered through a wet process such as leaching, solvent extraction, or crystallization. This allows smooth supply of raw materials and dramatic reduction in battery production costs.

In order to recycle the waste battery, the battery should be physically disassembled, and since the physical disassembly is related to safety issues such as battery explosion or electric shock, it is very a dangerous operation. After the physical disassembly, the battery is perforated and discharged in salt water. The battery which has been discharged is crushed and then subjected to a heat treatment at a high temperature for removing water and an electrolyte solution.

When salt water discharge is performed, the used salt contains a large amount of impurities such as Na, K, Mg, and Ca, which are present with the waste battery. Though Cl is removed in a certain portion in the heat treatment at a high temperature, the crushed material of the waste battery or black powder obtained by processing the crushed material contains the impurities such as Na, K, and Mg.

Herein, the crushed material is pieces of the battery obtained by a method such as crushing, and the black powder is a powder form in which oxides of Ni-Co-Mn-Li-O and C are mixed, obtained by further processing the crushed material to remove a part of Al, Cu, or a separator. When the crushed waste battery material is subjected to a heat treatment at a high temperature, oxygen is removed from the oxide to produce a compound including an alloy of Ni-Co-Mn-Cu and lithium, carbon, and carbon-containing ash.

Herein, Na, K, and Mg which are impurities included by performing salt water discharge in a wet treatment of the lithium-containing compound act as impurities during the wet treatment, and among them, when a process such as causticization (NaOH) used during wet recovery of Na, K, Mg, and Ca is performed, a process load is caused to increase treatment time and costs. In addition, Cl causes increased corrosion of pipes where chlorine ions are treated to increase facility costs or facility maintenance costs.

### [Disclosure]

### [Technical Problem]

The present disclosure attempts to provide a lithium compound for recovering valuable metals which is a lithium compound component capable of increasing operating efficiency of a wet process, reducing facility maintenance costs, and having a low impurity content.

The present disclosure attempts to provide a method for manufacturing a lithium compound for recovering valuable metals which is a method for producing a lithium compound having the benefits described above.

**[Technical Solution]**

An exemplary embodiment of the present disclosure provides a lithium compound for recovering valuable metals, recovered from a waste battery, the lithium compound including Li, Al, and impurities, wherein the impurities include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight, and the lithium compound satisfies the following Equation 1:

<Equation 1>

$$\langle Al \rangle / \langle Li \rangle \leq 1.30$$

wherein $\langle Al \rangle$ and $\langle Li \rangle$ are moles of Al and Li, respectively.

In an exemplary embodiment, the lithium compound may satisfy the following Equation 2:

<Equation 2>

$$([Na] + [K] + [Mg])/[Ca] \leq 3.6$$

wherein [Na], [K], [Mg], and [Ca] are % by weight of Na, K, Mg, and Ca, respectively.

In an exemplary embodiment, the lithium compound may satisfy the following Equation 3:

<Equation 3>

$$\langle Al \rangle = 0.3702 \times \langle Li \rangle + 0.0832 \pm 0.5$$

wherein $\langle Al \rangle$ and $\langle Li \rangle$ are moles of Al and Li, respectively.

Another exemplary embodiment of the present disclosure provides a method for recovering a lithium compound for recovering valuable metals including: preparing a battery, freezing and forcibly discharging the battery, crushing the battery, and heating the crushed battery material, wherein the heating is performed in a temperature range of 1,100 to 1,400°C, the heating is performed at a vacuum degree (LogP [atm]) in a range of -4 to 0, the lithium compound recovered by the heating includes impurities, and the impurities include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight.

In an exemplary embodiment, in the lithium compound recovered by the step of heating, lithium may be included at 13.0 wt% or more, in % by weight. In an exemplary embodiment, the method for recovering a lithium compound for recovering valuable metals may satisfy the following Equation 2:

<Equation 2>

$$([Na] + [K] + [Mg])/[Ca] \leq 3.6$$

wherein [Na], [K], [Mg], and [Ca] are % by weight of Na, K, Mg, and Ca, respectively.

In an exemplary embodiment, the step of heating the crushed battery material may be performed in a gas atmosphere of at least one of inert gas, carbon dioxide, carbon monoxide, and hydrocarbon gas. In an exemplary embodiment, the step of freezing and forcibly discharging the battery may be performed by cooling to -150 to -60°C.

In an exemplary embodiment, the step of freezing and forcibly discharging the battery may be performed by cooling to -60 to -20°C under a vacuum atmosphere condition of 1000 torr or less. In an exemplary embodiment, the step of freezing and forcibly discharging the battery may satisfy the following Equation 4:

<Equation 4>

$$\text{Minimum cooling time (Hr)} = A \times (W^{0.33})$$

wherein $A = 4 \times e^{(-0.02 \times dT)}$, W = battery weight (Kg), dT = | external cooling temperature - target temperature |, and | | refers to an absolute value.

In an exemplary embodiment, the step of freezing and forcibly discharging the battery may be forcible discharging at a discharge rate of less than 0.04 V/min.

[Advantageous Effects]

The lithium compound for recovering valuable metals according to an exemplary embodiment controls temperature and pressure in a heat treatment step in the method for recovering valuable metals, thereby providing a lithium compound component having low contents of impurities such as Na, K, Mg, and Ca to suppress a problem acting as a load of an additional process for removing the impurities for increasing a Li recovery rate in a wet recovery process and provide economic benefits to valuable metal recovery.

The method for manufacturing a lithium compound for recovering valuable metals according to another exemplary embodiment of the present disclosure provides a method for recovering valuable metals which produce a lithium compound having the benefits described above.

**[Description of the Drawings]**

FIG. 1 is a graph for a minimum cooling time according to an exemplary embodiment of the present disclosure.

FIG. 2 is a graph showing a relationship among battery weight, external cooling temperature, and cooling time, according to an exemplary embodiment of the present disclosure.

FIGS. 3A and 3B are photographs of fire occurrence when crushing after freezing for a shorter period of time than a minimum cooling time according to the comparative examples of the present disclosure, and FIGS. 3C and 3D are photographs of no fire occurrence when crushing after freezing for a longer period of time than a minimum cooling time according to the examples of the present disclosure.

FIG. 4 is a photograph in which an expansion amount depending on a discharge rate of a battery cell according to an exemplary embodiment of the present disclosure is evaluated.

FIG. 5 shows results of XRD analysis of a lithium compound produced after a heat treatment at a high temperature, according to an exemplary embodiment of the present disclosure.

FIGS. 6A to 6D are graphs showing a correlation between temperature and pressure for removing impurities, according to an exemplary embodiment of the present disclosure.

**[Mode for Invention]**

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

In the present specification, when it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, an exemplary embodiment of the present disclosure will be described in detail. However, it is suggested as an example, and the present disclosure is not thereby, and the present disclosure is only defined by the scope of the claims described later.

The lithium compound for recovering valuable metals according to an exemplary embodiment of the present disclosure is a lithium compound for recovering valuable metals recovered from a waste battery and includes Li, Al, and impurities. The impurities may include Na, K, Ca, and Mg.

In an exemplary embodiment, the lithium compound for recovering valuable metals may satisfy the following Equation 1:

$$<Equation\ 1>$$

$$<Al>/<Li> \leq 1.30$$

wherein $<Al>$ and $<Li>$ are moles of Al and Li, respectively.

Equation 1 refers to a mole ratio of aluminum to lithium. Equation 1 may satisfy 1.30 or less, specifically 0.61 or less. When Equation 1 is satisfied, Li is recovered in an aluminate form such as $LiAlO_2$ or $Li_5AlO_4$, thereby minimizing a deviation of a Li recovery rate. When Equation 1 does not satisfy the range described above, Li is recovered in an alumina form such as $Al_2O_3$, not an aluminate form, which increases process costs for removing Al impurities.

In an exemplary embodiment, a lithium compound may satisfy the following Equation 2:

$$<Equation\ 2>$$

$$([Na] + [K] + [Mg])/[Ca] \leq 3.6$$

wherein [Na], [K], [Mg], and [Ca] are % by weight of Na, K, Mg, and Ca, respectively.

Equation 2 is a relational expression of a ratio to the contents of impurities and may be used as a measure of an impurity removal concentration. Specifically, in Equation 2, Na and K are impurities which are relatively easily removed, but Mg and Ca are removed at a high temperature and simultaneously at a low vacuum degree, and thus, Equation 2 may be used as a measure as to whether the impurities, specifically Na and K are sufficiently removed.

Equation 2 may satisfy a range of 3.6 or less, specifically 2.0 to 3.6, and more specifically 2.2 to 3.2. When Equation 2 is out of the range described above, the impurities are not appropriately removed.

In an exemplary embodiment, the lithium compound may satisfy the following Equation 3:

$$<Equation\ 3>$$

$$<Al> = 0.3702 \times <Li> + 0.0832 \pm 0.5$$

wherein $<Al>$ and $<Li>$ are moles of Al and Li, respectively.

It was confirmed from Equation 3 that elements having strong oxidizing power at a high temperature, such as Li and Al produce reaction products stable at a high temperature, such as $LiAlO_2$ or $Li_5AlO_4$. As such, during a heat treatment at a high temperature, a reaction between an Al cover or an Al current collector and Li in a positive electrode material of a LiB battery occurs stably by the relational expression, and it was confirmed that a Li recovery rate may be improved by satisfying Equation 3.

A method for recovering a lithium compound for recovering valuable metals according to another exemplary embodiment of the present disclosure includes: preparing a battery, freezing and forcibly discharging the battery, crushing the battery, and heating the crushed battery material. Various forms of lithium compounds may be produced or recovered from lithium oxide ($Li_2O$) contained in the positive electrode material, by going through the step of heating the crushed battery material.

The step of preparing a battery is a step of preparing a material by crushing a base material of the crushed battery material or preparing a material which has been discharged itself. The base material of the crushed battery material may include batteries which have reached the end of its life, waste batteries, and waste materials occurring in a manufacturing process of a lithium-ion battery. Specifically, the waste battery may include a positive electrode material such as scraps, jelly roll, and slurry, defective products occurring during a manufacturing process, residues inside the manufacturing process, and occurring debris. The material which has been crushed itself may be a product which has been crushed itself such as black powder. As such, the crushed battery material is produced by recycling the waste battery, which is environmentally friendly and economical.

In an exemplary embodiment, the step of freezing and forcibly discharging the battery may be performed by cooling to a range of -150 to -60°C. When the temperature exceeds the upper limit of the temperature range, voltage remaining inside the battery is not lowered to 0 V, so that a battery reaction due to short circuit may occur, and an electrolyte may not be completely frozen.

EP 4 603 458 A1

In an exemplary embodiment, the step of freezing and forcibly discharging the battery may be performed by cooling to -60 to -20°C under a vacuum atmosphere of 1000 torr or less. The step of freezing and forcibly discharging the battery is performed at a temperature sufficient for an electrolyte included in the battery to freeze. Specifically, the step of freezing and forcibly discharging the battery may be performed for example, in a temperature range of -150 to -20°C. More specifically, the temperature range may be -150 to -50°C, more specifically, -80 to -60°C.

When the battery is frozen to the temperature range, voltage slightly remaining inside the battery, for example, a voltage of about 2 V to 3 V is lowered close to 0 V, and thus, even when a short circuit in which a positive electrode and a negative electrode are directly brought into contact occurs, a battery reaction does not occur, so that a battery temperature does not rise and gassing and combustion of an electrolyte do not occur. In addition, since the electrolyte is in a state of being frozen or in a state in which vaporization is suppressed, lithium ion mobility is very low, so that conduction properties due to the lithium ion movement may be significantly decreased and vaporization of the electrolyte solution may not occur, and thus, combustible gas of ethylene, propylene, and hydrogen may not occur.

When the freezing process is out of the temperature range, for example, the freezing is performed to a temperature higher than -60°C, voltage remaining inside a battery is not lowered to 0 V, and thus, a battery reaction by short circuit may occur and an electrolyte is not completely frozen, which is not appropriate. In addition, when the temperature is cooled to -150°C, the electrolyte is sufficiently cooled and also the voltage inside the battery is lowered to 0 V, and thus, there is no need to lower the temperature below -150°C. As such, the battery treatment method includes a freezing step before crushing batteries such as a lithium secondary battery, thereby preventing a risk of fire which may occur in the battery crushing process.

In an exemplary embodiment, the step of freezing and forcibly discharging the battery may be performed under the condition of supplying inert gas, carbon dioxide, nitrogen, water, or a combination thereof or under the vacuum conditions of 100 torr or less. For example, when a process of freezing a battery is performed by cooling to a temperature range of -60 to -20°C under the conditions described above, oxygen supply may be suppressed to prevent an electrolyte from reacting with oxygen, prevent explosion therefrom, and suppress vaporization of the electrolyte solution, and thus, combustible gas such as ethylene, propylene, or hydrogen may not occur.

In an exemplary embodiment, the step of freezing and forcibly discharging the battery may satisfy the following Equation 4:

<Equation 4>

$$\text{Minimum cooling time (Hr)} = A \times (W^{0.33})$$

wherein $A = 4 \times e^{(-0.02 \times dT)}$, W = battery weight (Kg), dT = | external cooling temperature - target temperature |, and | | refers to an absolute value.

The W of Equation 4 refers to the weight of the battery, and for example, refers to the weight of a battery pack, a single battery, or a combination thereof. The minimum cooling time is external cooling temperature which is cooling temperature applied to the battery, and for example, refers to target temperature for cooling an electrolyte solution in the battery.

The step of freezing and forcibly discharging the battery has a benefit of stably performing a subsequent process by performing the process for the minimum cooling time or a longer period of time to cool the electrolyte solution inside the battery. When in the step of freezing and forcibly discharging the battery, the battery is cooled for a shorter period of time than the minimum cooling time, the electrolyte solution may not be cooled to cause a risk of fire during crushing.

In an exemplary embodiment, the step of freezing and forcibly discharging the battery may be forcible discharging at a discharge rate of less than 0.04 V/min. Specifically, the forcible discharging may be performed at a discharge rate of 0.03 V/min. When it is out of the discharge rate range, the expansion amount of the battery is increased to reduce the stability.

The step of crushing the battery refers to a process of applying shock or pressure to the battery so that a part of the battery falls off from the battery. In an exemplary embodiment, the step of crushing the battery refers to all of a process of crushing the battery, a process of cutting the battery, a process of compressing the battery, or a combination thereof. Specifically, the step of crushing may include all processes of breaking a battery into small-sized crushed material.

In an exemplary embodiment, the step of crushing the battery may include both a process of compressing the frozen or discharged battery and a process of applying external force such as shear or tensile force to break the battery. The step of crushing the battery may be performed, for example, using a crusher.

In an exemplary embodiment, the step of crushing the battery may be performed at least once or more. Specifically, the step of crushing may be performed continuously or discontinuously at least once or more.

In an exemplary embodiment, the step of crushing the battery may be performed so that the maximum size of the crushed battery material is 100 mm or less. Specifically, it may be performed so that the size of the crushed battery material is 50 mm or less. When the maximum size of the crushed battery material is 100 mm or more, a heating temperature occurring due to instability by crushing of the crushed battery material rises to a temperature range of 120°C which is the average vaporization temperature of an electrolyte solution, and a problem in stability such as fire occurrence may occur.

In the step of heating the crushed battery material, the crushed battery material may be added to a heating furnace which may be heated to a high temperature and heated to a temperature to a melting temperature or higher. Specifically, the step of heating the crushed material may involve heat treatment conditions to allow a reduction reaction at a high temperature without a melting step.

In an exemplary embodiment, the step of heating the crushed battery material may be performed in a range of 1,100 to 1,400°C. Specifically, the range may be 1,200 to 1,400°C.

Within the temperature range, carbon in the crushed battery material is burned to a minimum, so that a reduction reaction may be performed with almost no carbon dioxide emissions. When temperature range exceeds the upper limit of the range, there is a loss due to lithium vaporization. When temperature range is below the lower limit of the range, sintering and reduction of an alloy element do not proceed.

In an exemplary embodiment, the step of heating the crushed battery material may be performed at a vacuum degree (LogP [atm]) in a range of - 4.0 to 0. Specifically, the vacuum degree may be in a range of -4.0 to - 1.0, more specifically - 3.6 to - 1.0. The vacuum degree refers to a logarithmic value of pressure (P) in the heating furnace.

When the crushed battery material is heated within the range satisfying the vacuum degree in the range, the concentrations of Na, K, Ca, and Mg which are impurities are decreased. When the vacuum degree exceeds the upper limit of the range, Na, K, Ca, and Mg do not vaporize, and thus, impurities are not removed, and when the vacuum degree is below the lower limit of the range, a Li actual yield is reduced due to the vaporization of Li.

In an exemplary embodiment, the step of heating the crushed battery material may be performed in at least one gas atmosphere of inert gas, carbon dioxide, carbon monoxide, and hydrocarbon gas. The inert gas may include, for example, at least one of argon and nitrogen. In the gas atmosphere, the crushed battery material is heated, thereby producing a compound including lithium included in the crushed battery material to effectively recover lithium.

In an exemplary embodiment, the lithium compound recovered by the step of heating may include at least any one of lithium aluminate ($LiAlO_2$), lithium carbonate ($LiCO_3$), lithium fluoride (LiF), and lithium chloride (LiCl). Specifically, the lithium-aluminate, the lithium carbonate, and the lithium fluoride may be prepared by the following Reaction Formulae 1 to 3:

$$[\text{Reaction Formula 1}] \qquad Li_2O(s) + AlO_3(s) = 2LiAlO_2(s)$$

$$[\text{Reaction Formula 2}] \qquad Li_2O(s) + C(s) + O_2(g) = Li_2CO_3(s)$$

$$[\text{Reaction Formula 3}] \qquad Li_2O + 2F = 2LiF + 1/2O_2(g).$$

As in Reaction Formulae 1 to 3, $Li_2O$ in the positive electrode material may produce $LiAlO_2$ by Al as the current collector or an Al cover material or produce $Li_2CO_3$ by a bond of negative electrode material carbon and positive electrode oxygen of oxygen in the air, and $Li_2O$ may react with fluorine contained in an electrolyte to produce LiF. Since the lithium compound is actively produced, the contents of impurities such as Na, K, Ca, and Mg may be decreased. Specifically, the impurities may be in a state of being dissolved in a small amount in the crystalline lithium compound.

In an exemplary embodiment, the lithium compound includes impurities, and the impurities may include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight.

Hereinafter, the reasons for limiting the contents of the impurities will be described.

### Na: 1.8% by weight or less (excluding 0%)

Sodium (Na) partially reacts instead of lithium in a lithium hydroxide formation process as a homologous element in a subsequent process of recovering valuable metals from the crushed battery material and forms sodium hydroxides, thereby having a side effect of lowering a lithium recovery rate or increasing costs in a causticization process. The lithium compound may include 1.8% by weight or less of the sodium. Specifically, 1.0% by weight or less, more specifically 0.3% by weight or less of the sodium may be included.

When the sodium is contained in a larger amount than the above range, during a crystallization process of Li dissolved in a solvent after a leaching process and a solvent extraction process, Na as a Group 1 element identical to Li decreases an actual yield in a process needed for producing lithium carbonate.

## Ca: 0.62% by weight or less (excluding 0%)

Calcium (Ca) is an element to lower the recovery rate of valuable metals in a post-process of recovering the valuable metals from the crushed battery material, like sodium. The lithium compound may include 0.62% by weight or less of calcium, and specifically 0.61% by weight or less, more specifically 0.3% by weight or less of calcium may be included.

When the calcium is contained in a larger amount than the range, an actual yield and a process time are increased during a solid-liquid separation process which is an impurity purification process after a leaching process. In addition, in the case in which a calcium content is excessively high, when nickel, cobalt, and manganese hydroxides, and lithium hydroxide in a precursor state are synthesized to produce a positive electrode material, they are synthesized into Li$[NiCoMn]_{1-x}Ca_x)]O_2$ and potassium forms a positive electrode material oxide structure, which hinders movement of lithium ions to decrease a battery capacity.

## Mg: 0.47% by weight or less

Magnesium (Mg) is an element which prevents easy separation of solid and liquid phases during leaching by an acid in a valuable metal recovery process. The lithium compound may include 0.47% by weight or less, specifically 0.46% by weight or less, and more specifically 0.3% by weight or less of magnesium.

When the magnesium is included in a larger amount than the range, a load is applied to a recovery process of nickel, cobalt, lithium, and the like. In addition, in the case in which a magnesium content is excessively high, when nickel, cobalt, and manganese hydroxides, and lithium hydroxide in a precursor state are synthesized to produce a positive electrode material, they are synthesized into Li$[NiCoMn]_{1-x}Mg_x)]O_2$ to form a positive electrode material oxide structure, which hinders movement of lithium ions to decrease a battery capacity.

## K: 0.06 wt% or less

Potassium (K) is also a homologous element of lithium and is an element acting as a hindrance in behavior of lithium being produced into a hydroxide compound. The lithium compound may include 0.06% by weight or less, specifically 0.05% by weight or less, and more specifically 0.01% by weight or less of potassium.

When the potassium is included in a larger amount of the range, a load is caused in a causticization process to decrease the recovery rate of lithium.

The following examples illustrate the present disclosure in more detail. However, the following examples are only a preferred exemplary embodiment, and the present disclosure is not limited to the following examples.

### <Experimental Example>

### <Temperature inside battery depending on minimum freezing time>

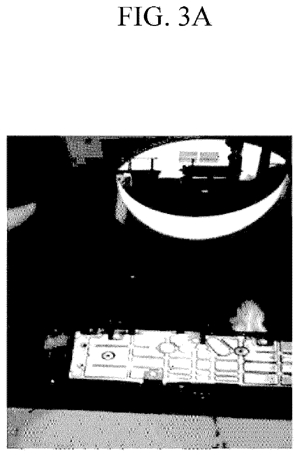

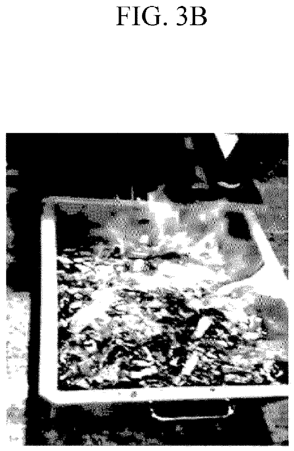

The battery pack used in the examples was crushed using the same crusher as that of the example, without freezing. Flame caused by short circuit occurred during the crushing process, as shown in FIGS. 3A and 3B.

As such, it was confirmed from the examples and the comparative examples that since no short circuit and no flame occurred in the step of crushing the battery, by including a step of freezing the battery pack including the battery, before crushing the battery, stability was excellent.

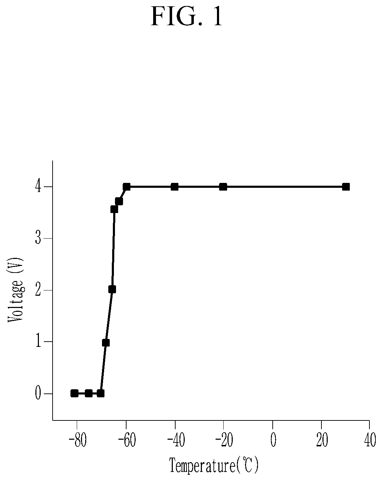

FIG. 1 shows a change in voltage of the battery depending on cooling temperature, according to an exemplary embodiment of the present disclosure.

Referring to FIG. 1, when a battery voltage was measured while cooling the battery to -80°C, the battery pack showed almost the same voltage at a high temperature of about 40°C, at room temperature, and down to -60°C, it was confirmed that battery characteristics were not lost. Subsequently, when the temperature was lowered to -60°C to -70°C, it was confirmed that voltage was rapidly lowered and voltage was 0 below -70°C. As such, when the battery was frozen to -60°C to -150°C, it was confirmed that no short circuit occurred.

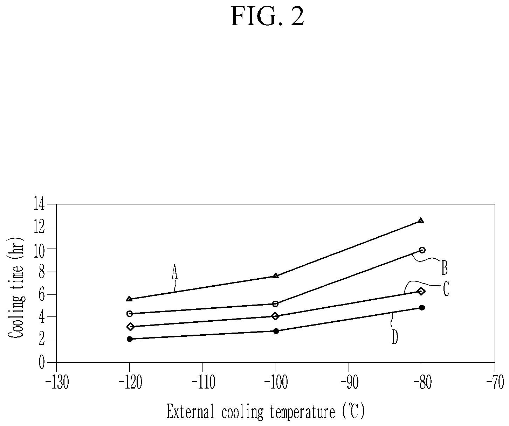

FIG. 2 is a graph showing a relationship among battery weight, external cooling temperature, and cooling time, according to an exemplary embodiment of the present disclosure.

Referring to FIG. 2, it was confirmed that the battery treatment method according to an exemplary embodiment of the present disclosure was able to derive a minimum cooling time for cooling the battery, in the step of freezing the battery. Specifically, it was confirmed that the minimum cooling time was related to battery weight, external cooling temperature, and target temperature. Specifically, the external cooling temperature and the minimum cooling time when the target temperature was set to -70°C and the battery weight was set to 2.5 kg (A), 10 kg (B), 20 kg (C), and 50 kg (D), respectively, are shown. When cooling the battery, the electrolyte solution of the battery began to cool after a predetermined time and a state of a voltage of 0 was confirmed. Thus, in cooling of the battery, it was confirmed that a minimum maintenance time for sufficiently cooling the inside, specifically the electrolyte solution was needed.

Specifically, in a heat transfer situation for cooling which loses heat to the outside, considering the specific heat of the battery itself, it was confirmed that battery weight and a time for cooling were needed. As such, in the present disclosure, in order to cool the battery, external cooling temperature and target temperature for freezing and battery weight were used to confirm a minimum time needed for cooling.

In the following Table 1, the minimum cooling time depending on the battery weight and the external cooling temperature is listed.

(Table 1)

|  | Battery weight [Kg] | External cooling temperat ure [°C] | Target temperat ure [°C] | Minimum cooling time [h] |
|---|---|---|---|---|
| A_1 | 2.5 | -120 | -70 | 1.9 |
| A_2 | 2.5 | -100 | -70 | 2.9 |
| A_3 | 2.5 | -80 | -70 | 4.4 |
| B_1 | 10 | -120 | -70 | 3.1 |
| B_2 | 10 | -100 | -70 | 4.6 |
| B_3 | 10 | -80 | -70 | 7.0 |
| C_1 | 20 | -120 | -70 | 3.9 |
| C_2 | 20 | -100 | -70 | 5.8 |
| C_3 | 20 | -80 | -70 | 8.8 |
| D_1 | 50 | -120 | -70 | 5.3 |
| D_2 | 50 | -100 | -70 | 7.9 |
| D_3 | 50 | -80 | -70 | 11.9 |

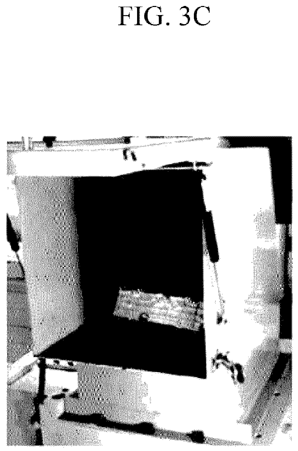

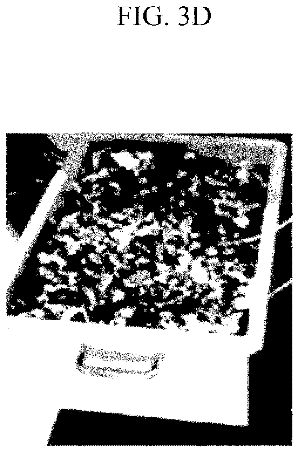

Upon review of Table 1, it was confirmed that the lighter the battery weight was, the less minimum cooling time of the battery to be cooled it took. In addition, when the battery was cooled for the minimum cooling time derived from a relational expression depending on the battery weight, the external cooling temperature, and the target temperature, it was confirmed that the battery, specifically, even the electrolyte of the battery was cooled. In addition, when the battery was cooled for the minimum cooling time or longer, no fire occurred in the battery crushing process which was the post-process. FIGS. 3A and 3B are photographs of fire occurrence when crushing after freezing for a shorter period of time than a minimum cooling time according to the comparative examples of the present disclosure, and FIGS. 3C and 3D are photographs of no fire occurrence when crushing after freezing for a longer period of time than a minimum cooling time according to the examples of the present disclosure.

Referring to FIGS. 3A and 3B, the fire occurrence state of the crushed material when the battery was frozen for the minimum cooling time needed for cooling the battery or a shorter period of time was experimented. In the experiment, when the battery weight was 25 kg, the external cooling temperature was -95°C, and the target freezing temperature was -70°C, the experiment was performed for 5 hours which was shorter than the 7 hours of the value of the following Equation 4.

<Equation 4>

$$\text{Minimum cooling time (Hr)} = A \times (W^{0.33})$$

wherein $A = 4 \times e^{(-0.02 \times dT)}$, W = battery weight (Kg), dT = | external cooling temperature - target temperature | , and | | refers to an absolute value.

Referring to FIGS. 3C and 3D, the fire occurrence state of the crushed material when the battery was frozen for the minimum freezing time needed for cooling the battery or a longer period of time was experimented. In the experiment, the case of the battery weight and the external cooling temperature which were the same as those of FIGS. 3A and 3B and the minimum freezing time of 7 hours was experimented.

In the following Table 2, the same battery weight, the external cooling temperature, and the minimum freezing time according to FIGS. 3A to 3D, and the fire occurrence state of the examples and the comparative examples were compared. The fire occurrence state was determined as "○" when fire occurrence was observed, and "×" when it was not observed, after battery crushing.

(Table 2)

|  | Battery weight [Kg] | External cooling temperature [°C] | Target temperatur e [°C] | Equation 4 | Real cooling time [h] | Fire occurrenc e |
|---|---|---|---|---|---|---|
| Comparati ve Example | 25 | - 95 | -70 | 7.0 | 5 | ○ |
| Example | 25 | - 95 | -70 | 7.0 | 7 | × |

Upon review of Table 2, when the battery was cooled to a value smaller than the value of Equation 4 corresponding to the minimum cooling time, it was confirmed that the electrolyte was not cooled, and fire occurred after crushing the battery. As such, when the battery was cooled with the value of Equation 4 as the minimum cooling time, it was confirmed that the crushed material was able to be stably used without fire occurrence, after crushing the battery.

**<Forcible discharge>**

When electrical discharge was performed for forcible discharge, discharge was performed close to 0 V, and the discharge rate at this time was 5 V or less per minute (V/min) by pack. In general, though a battery by pack had a voltage of about 500 V, this was different depending on the charge state, the number of uses, and the conditions of vehicles. Therefore, the test was performed by battery cell which was the minimum unit in the battery, and the battery cell had a voltage up to 4.2 V.

The following Table 3 shows the behavior of the expansion amount of the battery by cell depending on the discharge rate and the temperature.

(Table 3)

| Discharge rate [V/min] | 0.01 | 0.02 | 0.03 | 0.04 | 0.05 | 0.1 | 0.2 | 0.5 |
|---|---|---|---|---|---|---|---|---|
| Room temperatu re expansion amount [mm] | Within 0.5 | 0.7 | 0.7 | 2 | 10 or more | Untestable | | |
| Low temperatu re (-20°C) expansion amount | Within 0.5 | Within 0.5 | Within 0.5 | 0.8 | 1.0 | 1.1 | 1.3 | 2.0 or more |

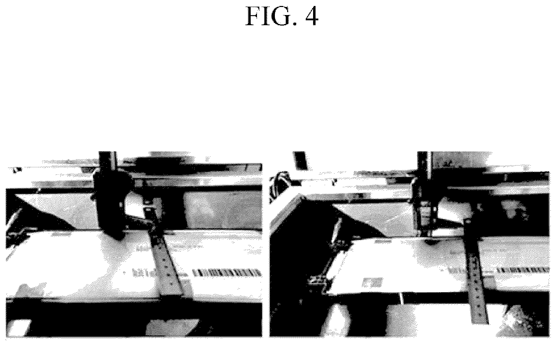

FIG. 4 is a photograph in which an expansion amount depending on a discharge rate of a battery cell according to an exemplary embodiment of the present disclosure is evaluated. Upon review of Table 3 and FIG. 4, it was confirmed that when the discharge was performed at 0.04 V/min or more by cell when forcible discharging, the chemical structure in the battery collapsed rapidly, the battery became very unstable, and the expansion amount was increased due to a phenomenon such as vaporization of the positive electrode material and the electrolyte solution inside the battery.

**<Comparison of impurity components in crushed battery material according to discharge method>**

In the following Table 4, the impurity components such as Na, K, Mg, and Ca in the crushed battery material produced by crushing the battery after the salt water discharge and the crushed battery material produced after the forcible discharge and the freeze crushing were compared.

(Table 4)

| Classification | Na [%] | K [%] | Mg [%] | Ca [%] | Remark |
|---|---|---|---|---|---|
| Salt water discharge | 0.830 | 0.027 | 0.049 | 0.034 | Comparative Example |
| Forcible discharge & freeze crushing | 0.054 | 0.0065 | 0.0101 | 0.02 | Example |

Upon review of Table 4, it was confirmed that when the freeze crushing and electrical forcible discharge were performed, the contents of Na, K, Mg, and Ca components which were impurities were lower than those in the case of the salt water discharge. **<Comparison of components and content of lithium compound produced after heat**

**treatment at high temperature>**

The following Table 5 shows the components and the contents of the lithium compound and the product produced when the crushed material of the examples containing the impurities of Table 4 was heat treated at a high temperature of 1300°C.

(Table 5)

| Classifi cation [wt%] | Li | Al | C | F | Na | K | Mg | Ca | gram |
|---|---|---|---|---|---|---|---|---|---|
| Product | 1.91 | 4.68 | 4.78 | 1.69 | 0.05 | 0.01 | 0.01 | 0.02 | 50.0 |
| Lithium compou nd | 13.50 | 32.44 | 2.72 | 3.56 | 0.09 | 0.01 | 0.07 | 0.14 | 6.0 |

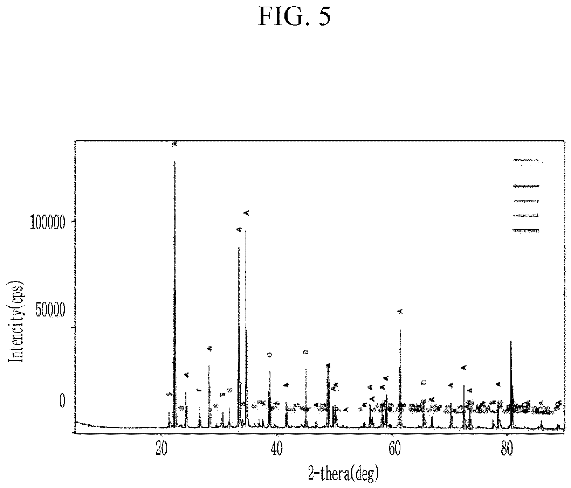

Upon review of Table 5, it was confirmed that the Na, K, Mg, Ca components which were impurities of the frozen crushed material were concentrated up to 800%. This is because the weight of the lithium compound produced after the heat treatment at a high temperature was decreased to a level of 6% relative to 100 g of the weight of the crushed material. In addition, in the case of the lithium compound produced by external force, the contents of the impurities, Na, K, Mg, and Ca were able to be controlled to 0.3%, 0.1%, 0.3%, and 0.5% or less. FIG. 5 shows results of XRD analysis of a lithium compound produced after a heat treatment at a high temperature, according to an exemplary embodiment of the present disclosure.

Upon review of FIG. 5, it was confirmed that a crystal phase including Na, K, Ca, and Mg was not observed. Specifically, it was confirmed that the impurities were dissolved in a small amount in $LiAlO_2$, $Li_2CO_3$, or LiF which was mostly crystalline.

Specifically, a $LiAlO_2$ composition may include at least one of 20.5 to 21.5°, 29.0 to 29.5°, 31.5 to 32.0°, 32.2 to 33.0°, 60.5 to 61.5°, and 70.0 to 72.0°, as the XRD peak. A $Li_5AlO_4$ composition may include at least one of 19.5 to 20.2° and 21.6 to 22.2°, as the XRD peak. A LiF composition may include at least one of 37.5 to 40.2°, 43.9 to 46.5°, and 64.5 to 66.5°, as the XRD peak. A $Li_2CO_3$ composition may include at least one of 24.0 to 26.0°, 27.0 to 29.0°, 34.0 to 36.0°, and 37.0 to 39.0°, as the XRD peak.

In the following Table 6, the components of the lithium compounds of the product after the heat treatment at a high temperature and the alloy separated by an external force were compared.

(Table 6)

| Classification [wt%] | | Li | Al | C | F | Na | K | Mg | Ca |
|---|---|---|---|---|---|---|---|---|---|
| Salt water dischar ge | Lithium compo und | 13.6 | 30.08 | 2.44 | 3.2 | 1.67 | 0.06 | 0.45 | 0.61 |
| Low temper ature freeze crushin 9 | | 14.15 | 31.29 | 2.54 | 3.33 | 0.15 | 0.02 | 0.14 | 0.39 |

Upon review of Table 6, it was confirmed that the contents of the impurities in the lithium compound which was heat treated at a high temperature after the salt water discharge were about 2 to 11 times higher than the frozen crushed material. When the heat treatment at a high temperature was performed after the salt water discharge, the contents of impurities were high and a process for removing impurities may be added for recovering lithium during a wet process, which leaded to a process load. Therefore, the impurity components of Na, K, Mg, and Ca were able to be controlled to 0.3%, 0.1%, 0.3%, and 0.5% or less, respectively, by performing the heat treatment at a high temperature after performing cryogenic freezing crushing and forcible discharge.

**<Control of impurities according to temperature and vacuum degree in heat treatment step at high temperature>**

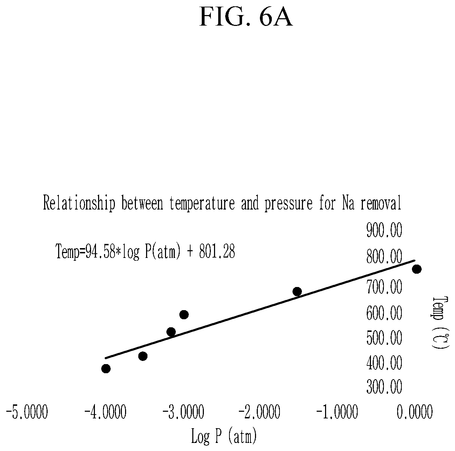

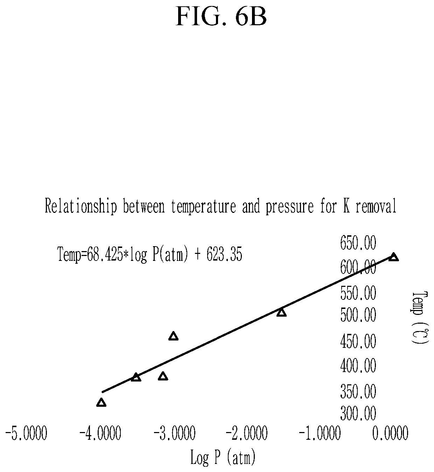

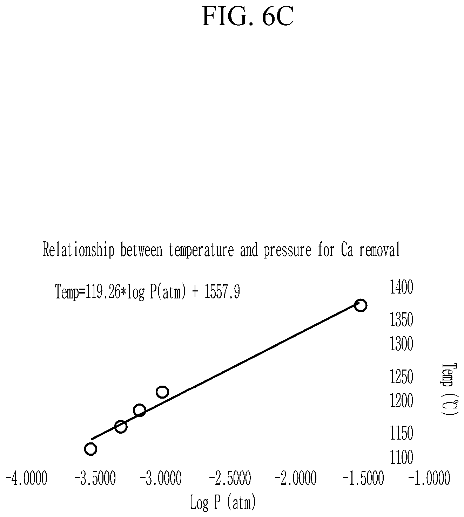

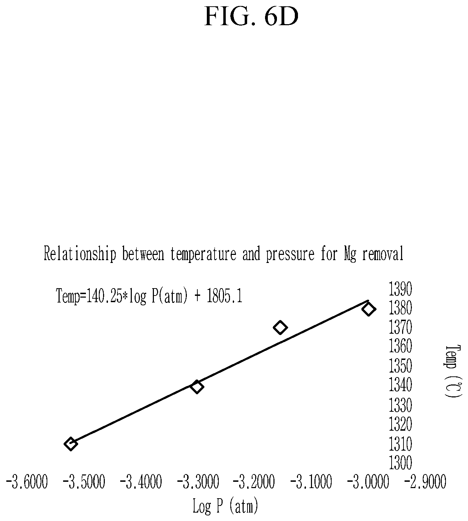

FIGS. 6A to 6D are graphs showing a correlation between temperature and pressure for removing impurities, according to an exemplary embodiment of the present disclosure.

Referring to FIGS. 6A to 6D, they are graphs showing a correlation between temperature and pressure for removing impurities of Na, K, Ca, and Mg, respectively. Specifically, the impurities such as Ca, Mg, Na, and K which are volatile materials were able to be removed while suppressing the volatile reaction of Li, by adjusting the temperature and the vacuum degree. The temperature may be adjusted within the temperature range of 300 to 1400°C, and the vacuum degree logP (atm) may be adjusted within the range of - 4 to 0.

When the crushed material or black mass of the LiB battery in a state of having high contents of the impurities were charged into the reaction furnace for heat treatment at a high temperature, Na, K, Ca, and Mg were able to be removed by the following reaction formulae.

Specifically, the volatilization conditions of Na, K, Ca, and Mg were as shown in the following Reaction Formulae 1 to 4:

Na volatilization condition: reaction temperature = 94.58 × logP (atm) + 801.28     [Reaction Formula 1]

K volatilization condition: reaction temperature = 68.425 × logP (atm) + 623.35     [Reaction Formula 2]

Ca volatilization condition: reaction temperature = 119.26 × logP (atm) + 1557.9     [Reaction Formula 3]

Mg volatilization condition: reaction temperature = 140.25 × logP (atm) + 1805.1     [Reaction Formula 4]

The following Table 7 shows changes in Na, K, Ca, and Mg components after applying the heat treatment at a high temperature depending on temperature and vacuum degree.

(Table 7)

| Classifica tion | Temp eratur e [°C] | Vacuum degree logP [atm] | Li [wt %] | Li [mole s] | Al [wt%] | Al [mole s] | C [wt %] | F [wt %] | Na [wt %] | K [wt%] | Mg [wt %] | Ca [wt %] | ([Na] +[K]+ [Mg])/[Ca] | <Al>/ <Li> | Remark s |
|---|---|---|---|---|---|---|---|---|---|---|---|---|---|---|---|
| Experime ntal Example | 1000 | -5 | 13.2 | 0.317 | 30.25 | 1.874 | 2.62 | 3.34 | 0.81 | 0.04 | 0.42 | 0.63 | 2.0 | 5.914 | Compar ative Exampl e |
| Experime ntal Example | | -4 | 13.3 | 0.620 | 30.18 | 1.810 | 2.12 | 3.31 | 0.97 1 | 0.041 | 0.42 | 0.62 | 2.3 | 2.922 | Compar ative Exampl e |
| Experime ntal Example | | -3 | 13.1 | 0.735 | 30.11 | 1.766 | 2.34 | 3.21 | 1.21 3 | 0.046 | 0.44 | 0.63 | 2.7 | 2.404 | Compar ative Exampl e |
| Experime ntal Example | | -2 | 13.6 | 0.807 | 30.21 | 1.739 | 2.28 | 3.29 | 1.41 9 | 0.053 | 0.43 | 0.61 | 3.1 | 2.156 | Compar ative Exampl e |
| Experime ntal Example | | -1 | 13.4 | 0.922 | 30.14 | 1.705 | 2.31 | 3.17 | 1.61 | 0.057 | 0.45 | 0.62 | 3.4 | 1.849 | Compar ative Exampl e |
| Experime ntal Example | | 0 | 13.6 | 1.037 | 30.08 | 1.667 | 2.44 | 3.2 | 1.67 | 0.06 | 0.45 | 0.61 | 3.6 | 1.607 | Compar ative Exampl e |
| Experime ntal Example | 1100 | -5 | 12.9 | 0.936 | 30.78 | 1.719 | 2.71 | 3.02 | 0.62 | 0.024 | 0.36 | 0.38 | 2.6 | 1.836 | Compar ative Exampl e |
| Experime ntal Example | | -4 | 13.4 | 1.931 | 30.31 | 1.123 | 2.24 | 3.12 | 0.83 | 0.028 | 0.41 | 0.46 | 2.8 | 0.582 | Exampl e |
| Experime ntal Example | | -3 | 13.6 | 1.959 | 30.32 | 1.124 | 2.41 | 3.38 | 0.88 | 0.029 | 0.42 | 0.58 | 2.3 | 0.574 | Exampl e |
| Experime ntal Example | | -2 | 13.6 | 1.959 | 30.28 | 1.122 | 2.12 | 3.19 | 1.32 | 0.031 | 0.43 | 0.62 | 2.9 | 0.573 | Exampl e |
| Experime ntal Example | | -1 | 13.5 | 1.945 | 30.13 | 1.117 | 2.24 | 3.22 | 1.48 | 0.045 | 0.43 | 0.61 | 3.2 | 0.574 | Exampl e |
| Experime ntal Example | | 0 | 13.6 | 1.959 | 30.08 | 1.115 | 2.44 | 3.2 | 1.67 | 0.06 | 0.45 | 0.61 | 3.6 | 0.569 | Exampl e |

| Classifica tion | Temp eratur e [°C] | Vacuum degree logP [atm] | Li [wt %] | Li [mole s] | Al [wt%] | Al [mole s] | C [wt %] | F [wt %] | Na [wt %] | K [wt%] | Mg [wt %] | Ca [wt %] | ([Na] +[K]+ [Mg])/[Ca] | <Al>/ <Li> | Remark s |
|---|---|---|---|---|---|---|---|---|---|---|---|---|---|---|---|
| Experime ntal Example | 1200 | -5 | 12.2 | 0.879 | 31.02 | 1.752 | 2.88 | 2.7 | 0.51 | 0.021 | 0.31 | 0.22 | 3.8 | 1.993 | Exampl e |
| Experime ntal Example |  | -4 | 13.4 | 1.931 | 30.67 | 1.137 | 2.92 | 3.12 | 0.83 | 0.028 | 0.41 | 0.46 | 2.8 | 0.589 | Exampl e |
| Experime ntal Example |  | -3 | 13.6 | 1.959 | 30.22 | 1.120 | 2.71 | 3.08 | 0.88 | 0.029 | 0.42 | 0.58 | 2.3 | 0.572 | Exampl e |
| Experime ntal Example |  | -2 | 13.6 | 1.959 | 30.09 | 1.115 | 2.58 | 3.31 | 1.32 | 0.031 | 0.43 | 0.62 | 2.9 | 0.569 | Exampl e |
| Experime ntal Example |  | -1 | 13.5 | 1.945 | 30.19 | 1.119 | 2.31 | 3.12 | 1.48 | 0.045 | 0.43 | 0.61 | 3.2 | 0.575 | Exampl e |
| Experime ntal Example |  | 0 | 13.6 | 1.959 | 30.08 | 1.115 | 2.44 | 3.2 | 1.67 | 0.06 | 0.45 | 0.61 | 3.6 | 0.569 | Exampl e |
| Experime ntal Example | 1300 | -5 | 10.4 | 0.475 | 31.72 | 1.888 | 2.82 | 2.1 | 0.42 | 0.018 | 0.22 | 0.18 | 3.7 | 3.971 | Compar ative Exampl e |
| Experime ntal Example |  | -4 | 13.2 | 1.902 | 31.02 | 1.150 | 2.76 | 2.91 | 0.52 | 0.031 | 0.28 | 0.33 | 2.5 | 0.605 | Exampl e |
| Experime ntal Example |  | -3 | 13.4 | 1.931 | 30.77 | 1.140 | 2.44 | 3.17 | 0.78 | 0.042 | 0.33 | 0.51 | 2.3 | 0.591 | Exampl e |
| Experime ntal Example |  | -2 | 13.4 | 1.931 | 30.06 | 1.114 | 2.58 | 3.32 | 0.82 | 0.051 | 0.46 | 0.61 | 2.2 | 0.577 | Exampl e |
| Experime ntal Example |  | -1 | 13.5 | 1.945 | 30.13 | 1.117 | 2.41 | 3.11 | 1.18 | 0.058 | 0.44 | 0.6 | 2.8 | 0.574 | Exampl e |
| Experime ntal Example |  | 0 | 13.6 | 1.959 | 30.08 | 1.115 | 2.44 | 3.2 | 1.67 | 0.06 | 0.45 | 0.61 | 3.6 | 0.569 | Exampl e |

14

| Classifica tion | Temp eratur e [°C] | Vacuum degree logP [atm] | Li [wt %] | Li [mole s] | Al [wt%] | Al [mole s] | C [wt %] | F [wt %] | Na [wt %] | K [wt%] | Mg [wt %] | Ca [wt %] | ([Na] +[K]+ [Mg])/[Ca] | <Al>/ <Li> | Remark s |
|---|---|---|---|---|---|---|---|---|---|---|---|---|---|---|---|
| Experime ntal Example | 1400 | -5 | 8.5 | 0.360 | 31.53 | 1.920 | 3.1 | 1.9 | 0.38 | 0.014 | 0.19 | 0.12 | 4.9 | 5.331 | Compar ative Exampl e |
| Experime ntal Example | | -4 | 13.1 | 1.887 | 30.88 | 1.145 | 2.98 | 2.81 | 0.52 | 0.022 | 0.21 | 0.26 | 2.9 | 0.606 | Exampl e |
| Experime ntal Example | | -3 | 13.3 | 1.916 | 30.72 | 1.139 | 3.12 | 3.19 | 0.64 | 0.029 | 0.31 | 0.42 | 2.3 | 0.594 | Exampl e |
| Experimental Example | | -2 | 13.6 | 1.959 | 30.45 | 1.129 | 2.67 | 3.11 | 0.82 | 0.042 | 0.44 | 0.59 | 2.2 | 0.576 | Exampl e |
| Experime ntal Example | | -1 | 13.6 | 1.959 | 30.09 | 1.115 | 2.61 | 3.28 | 1.29 | 0.055 | 0.47 | 0.61 | 3.0 | 0.569 | Exampl e |
| Experime ntal Example | | 0 | 13.6 | 1.959 | 30.08 | 1.115 | 2.44 | 3.2 | 1.67 | 0.06 | 0.45 | 0.61 | 3.6 | 0.569 | Exampl e |
| Experime ntal Example | 1500 | -5 | 4.1 | 0.173 | 32.12 | 2.007 | 3.31 | 0.8 | 0.26 | 0.012 | 0.16 | 0.11 | 3.9 | 11.60 9 | Compar ative Exampl e |
| Experime ntal Example | | -4 | 10.2 | 0.403 | 31.82 | 1.885 | 3.08 | 2.41 | 0.41 | 0.025 | 0.19 | 0.22 | 2.8 | 4.674 | Compar ative Exampl e |
| Experime ntal Example | | -3 | 12.6 | 0.591 | 31.02 | 1.809 | 2.91 | 2.91 | 0.55 | 0.028 | 0.29 | 0.39 | 2.2 | 3.063 | Compar ative Exampl e |
| Experime ntal Example | | -2 | 13.1 | 0.908 | 30.41 | 1.702 | 2.96 | 3.09 | 0.77 | 0.035 | 0.41 | 0.52 | 2.3 | 1.875 | Compar ative Exampl e |
| Experime ntal Example | | -1 | 13.4 | 1.066 | 30.22 | 1.652 | 2.51 | 3.31 | 1.12 | 0.047 | 0.47 | 0.57 | 2.9 | 1.549 | Compar ative Exampl e |
| Experime ntal Example | | 0 | 13.6 | 1.181 | 30.08 | 1.607 | 2.44 | 3.2 | 1.67 | 0.06 | 0.45 | 0.61 | 3.6 | 1.361 | Compar ative Exampl e |

Upon review of Table 7, when the temperature was as low as 1,000°C, it was confirmed that Ca, Mg, Na, and K were not sufficiently removed even when the vacuum degree was lowered. In addition, when the temperature was 1,100 to 1,400°C, or the vacuum degree was excessively low at -5, Li loss was confirmed. In addition, at a temperature of 1,500°C which is higher than 1,400°C, it was confirmed that Li loss occurred at a vacuum degree of -3, which showed work deterioration at a high temperature.

Though the preferred exemplary embodiments have been described in detail above, the scope of rights of the present disclosure is not limited thereto,and many variations and modifications by a person skilled in the art using the basic concept of the present disclosure as defined in the following claims also belong to the scope of rights of the present disclosure.

**Claims**

1. A lithium compound for recovering valuable metals, recovered from a waste battery,

   comprising Li, Al, and impurities,
   wherein the impurities include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight, and the lithium compound satisfies the following Equation 1:

   $\langle Al \rangle / \langle Li \rangle \leq 1.30$ wherein $\langle Al \rangle$ and $\langle Li \rangle$ are moles of Al and Li, respectively.      <Equation 1>

2. The lithium compound of claim 1, wherein:
   the lithium compound satisfies the following Equation 2:

   $([Na] + [K] + [Mg])/[Ca] \leq 3.6$ wherein $[Na]$, $[K]$, $[Mg]$, and $[Ca]$ are % by weight of Na, K, Mg, and Ca, respectively.      <Equation 2>

3. The lithium compound of claim 1, wherein:
   the lithium compound satisfies the following Equation 3:

   $\langle Al \rangle = 0.3702 \times \langle Li \rangle + 0.0832 \pm 0.5$ wherein $\langle Al \rangle$ and $\langle Li \rangle$ are moles of Al and Li, respectively.      <Equation 3>

4. A method for recovering a lithium compound for recovering valuable metals, the method comprising:

   preparing a battery;
   freezing and forcibly discharging the battery;
   crushing the battery; and
   heating the crushed battery material,
   wherein the heating is performed in a temperature range of 1,100 to 1,400°C,
   the heating is performed at a vacuum degree (LogP [atm]) in a range of - 4 to 0,
   the lithium compound recovered by the heating includes impurities, and the impurities include 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg, in % by weight.

5. The method for recovering a lithium compound for recovering valuable metals of claim 4, wherein:
   in the lithium compound recovered by the heating, lithium is included at 13.0 wt% or more in % by weight.

6. The method for recovering a lithium compound for recovering valuable metals of claim 4, wherein:
   the method satisfies the following Equation 2:

   $([Na] + [K] + [Mg])/[Ca] \leq 3.6$ wherein $[Na]$, $[K]$, $[Mg]$, and $[Ca]$ are % by weight of Na, K, Mg, and Ca, respectively.      <Equation 2>

EP 4 603 458 A1

**7.** The method for recovering a lithium compound for recovering valuable metals of claim 4, wherein:
the heating of the crushed battery material is performed in at least one gas atmosphere of inert gas, carbon dioxide, carbon monoxide, and hydrocarbon gas.

**8.** The method for recovering a lithium compound for recovering valuable metals of claim 4, wherein:
the cooling and forcible discharging of the battery is performed by cooling to -150 to -60°C.

**9.** The method for recovering a lithium compound for recovering valuable metals of claim 4, wherein:
the cooling and forcible discharging of the battery is performed by cooling to -60 to -20°C under a vacuum atmosphere condition of 1000 torr or less.

**10.** The method for recovering a lithium compound for recovering valuable metals of claim 4, wherein:
the cooling and forcible discharging of the battery satisfies the following Equation 4:

Minimum cooling time (Hr) = A $\times$ (W$^{0.33}$) wherein A = 4 $\times$ e$^{(-0.02 \times dT)}$, W = battery weight (Kg), dT= | external cooling temperature - target temperature | ,        <Equation 4>

and | | refers to an absolute value.

**11.** The method for recovering a lithium compound for recovering valuable metals of claim 4, wherein:
in the cooling and forcible discharging of the battery, the forcible discharging is performed at a discharge rate of less than 0.04 V/min.

17

FIG. 1

# FIG. 2

FIG. 3A

FIG. 3B

FIG. 3C

FIG. 3D

FIG. 4

# FIG. 5

# FIG. 6A

Relationship between temperature and pressure for Na removal

Temp=94.58*log P(atm) + 801.28

FIG. 6B

Relationship between temperature and pressure for K removal

Temp=68.425*log P(atm) + 623.35

FIG. 6C

Relationship between temperature and pressure for Ca removal

Temp=119.26*log P(atm) + 1557.9

# FIG. 6D

Relationship between temperature and pressure for Mg removal

Temp=140.25*log P(atm) + 1805.1

Log P (atm)

Temp (℃)

## INTERNATIONAL SEARCH REPORT

| International application No. |
|---|
| **PCT/KR2023/015650** |

**A.    CLASSIFICATION OF SUBJECT MATTER**

**C01F 7/043**(2022.01)i; **C01D 15/04**(2006.01)i; **C01D 15/08**(2006.01)i; **H01M 10/54**(2006.01)i; **H01M 10/052**(2010.01)i; **B02C 23/08**(2006.01)i

According to International Patent Classification (IPC) or to both national classification and IPC

**B.    FIELDS SEARCHED**

Minimum documentation searched (classification system followed by classification symbols)

C01F 7/043(2022.01); B02C 19/00(2006.01); C06B 21/00(2006.01); C22B 26/12(2006.01); C22B 7/00(2006.01); H01M 10/052(2010.01); H01M 10/0525(2010.01); H01M 10/54(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐배터리(waste battery), 냉동(freeze), 방전(discharge), 가열(heating), 회수 (recovery)

**C.    DOCUMENTS CONSIDERED TO BE RELEVANT**

| Category* | Citation of document, with indication, where appropriate, of the relevant passages | Relevant to claim No. |
|---|---|---|
| Y | CN 114606386 A (NORTHEASTERN UNIVERSITY) 10 June 2022 (2022-06-10)<br>     See claims 1-3; and paragraph [0034]. | 1-11 |
| Y | KR 10-1883100 B1 (INDUSTRY-ACADEMIC COOPERATION FOUNDATION, YONSEI UNIVERSITY) 27 July 2018 (2018-07-27)<br>     See claims 1-2; and paragraphs [0037]-[0055]. | 1-11 |
| Y | KR 10-2022-0135176 A (POSCO) 06 October 2022 (2022-10-06)<br>     See claims 1 and 4. | 9-10 |
| A | US 5523516 A (BERRY, S. D. et al.) 04 June 1996 (1996-06-04)<br>     See entire document. | 1-11 |
| A | KR 10-2452645 B1 (KEN, Gi-Chang) 07 October 2022 (2022-10-07)<br>     See entire document. | 1-11 |

| ☐ Further documents are listed in the continuation of Box C. | ☑ See patent family annex. |
|---|---|

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 January 2024** | **15 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015650**

| Patent document cited in search report | | | Publication date (day/month/year) | Patent family member(s) | | | Publication date (day/month/year) |
|---|---|---|---|---|---|---|---|
| CN | 114606386 | A | 10 June 2022 | CN | 114606386 | B | 28 April 2023 |
| KR | 10-1883100 | B1 | 27 July 2018 | None | | | |
| KR | 10-2022-0135176 | A | 06 October 2022 | WO | 2022-211446 | A1 | 06 October 2022 |
| US | 5523516 | A | 04 June 1996 | None | | | |
| KR | 10-2452645 | B1 | 07 October 2022 | None | | | |

Form PCT/ISA/210 (patent family annex) (July 2022)